# NEUE EUROPÄISCHE PATENTSCHRIFT

(11) **EP 1 752 659 B2**
(45) Veröffentlichungstag und Bekanntmachung des Hinweises auf die Entscheidung über den Einspruch: **14.06.2017**
(45) Hinweis auf die Patenterteilung: 12.03.2014
(21) Anmeldenummer: 06016098.3
(22) Anmeldetag: 02.08.2006
(51) Int. Cl.: F03D 7/02, F03D 7/04, F03D 9/00

(54) **Verfahren zum Betrieb eines Windenergieanlagenparks**
Method of operation of a windpark and a windpark
Méthode d'opération d'un parc d'éoliennes et parc d'éoliennes

(30) Priorität: 12.08.2005 DE 102005038558
(43) Veröffentlichungstag der Anmeldung: 14.02.2007
(73) Patentinhaber: Senvion GmbH, 22297 Hamburg (DE)
(72) Erfinder: Letas, Heinz-Hermann, Dr., 23701 Gross Meinsdorf (DE); Schmude, Manfred, 24768 Rendsburg (DE)
(74) Vertreter: Seemann & Partner Patentanwälte mbB

(56) Entgegenhaltungen:
- WO-A-2004/099604
- WO-A1-02/086314
- DE-A1- 4 033 696
- DE-A1- 10 317 422
- DE-A1- 19 953 238
- DE-U1- 20 020 232
- DE-U1- 20 113 372
- DE-U1-202004 009 071
- FR-A- 2 826 524
- JP-A- 2005 020 805
- US-A1- 2002 084 655
- US-A1- 2004 145 188
- http://de.wikipedia.org/wiki/Einschalten des Transformators
- GUDAT R. ET AL: 'Handlungsvorgaben zum Teilnetzwiederaufbau ohne Spannungsvorgabe von außen' VDI-BERICHTE Nr. 1747, 2003, Seiten 75 - 94
- KRISTOFFERSEN J.R.: 'The horns rev wind farm and the operational experience with the wind farm main controller' COPENHAGEN OFFSHORE WIND 2005 26 Oktober 2005, Seiten 1 - 9

## Beschreibung

Die Erfindung betrifft ein Verfahren zum Betrieb eines Windenergieanlagenparks, insbesondere eines Offshore-Windenergieanlagenparks, bei Ausfall oder Störung eines den Windenergieanlagenpark versorgenden Spannungsnetzes oder bei vorgesehenen Arbeiten an Übertragungsnetzkomponenten des Windenergieanlagenparks.

Aus der Veröffentlichung "Grid Connection and Remote Control for the Horns Rev 150 MW Offshore Wind Farm in Denmark", Peter Christiansen, Knud K. Jørgensen und Aksel Gruelund Sørensen, in Workshop on Electrical Design of Offshore Wind Installations, Tuesday 07. November 2000, Rutherford Appleton Laboratory, Oxfordshire, UK, ist ein Offshore-Windenergieanlagenpark bekannt, bei dem ein Notfalldieselgenerator vorgesehen ist, der die Transformatorstation und Windturbinen mit genug Leistung versieht, wenn ein die Windenergieanlage versorgendes Spannungsnetz, das im Folgenden Versorgungsnetz genannt wird, ausfällt. Hierbei kann die Transformatorstation und können die Windturbinen im Hinblick auf die wesentlichen Funktionen versorgt werden, nämlich die Klimatisierung, die Steuerung der Sicherheitssysteme sowie die Azimutwinkel-Verstellung, d.h. das Nachfahren des Rotors nach der Windrichtung, um eine Zerstörung der Windenergieanlage durch zu starke Winde zu vermeiden. Über den Betrieb des Dieselgenerators ist keinerlei Aussage gemacht.

In WO-A-2004/099604 ist außerdem ein Verfahren zum Betrieb eines Windparks mit mehreren Windenergieanlagen offenbart, wobei der Betriebsablauf jeder Windenergieanlage derart gesteuert wird, dass nur bis zu einem vorgebbaren Maximalwert elektrische Energie aus dem Netz gezogen wird. Darüber hinaus ist in diesem Dokument ein Windpark offenbart, der eine zentrale Vorrichtung zur Steuerung des Windparks aufweist.

Überdies offenbart DE-A-103 17 422 eine Energieversorgungseinrichtung zum Bereitstellen von elektrischer Eigenbedarfsenergie in Komponenten eines Windkraftwerks in Form von Windturbinen, Spannungsnetzen und Transformatorstationen. Hierbei ist die Energieversorgungseinrichtung mit einer Verteilereinheit ausgerüstet, die elektrische Energie für die Komponenten aus dem Windkraftwerk und bei definierten Störungen aus dem Inhalt wenigstens eines aufladbaren Energiespeichers elektrische Energie bezieht.

Des Weiteren offenbart DE-U-20 2004 009 071 eine Windenergieanlage mit einem Rotor, einem Generator, der von dem Rotor angetrieben elektrische Energie zur Einspeisung in ein Netz erzeugt, mindestens einem in einer Rotornabe drehbar gelagerten Rotorblatt, das um seine Längsachse verstellbar ist, und einen Hilfsgenerator, von dem Rotor angetrieben elektrische Energie für mindestens einen Verbraucher erzeugt. Der Hilfsgenerator erzeugt in einem Drehzahlbereich des Rotors, der sich für mindestens ein im Wesentlichen in die Fahnenstellung gestelltes Rotorblatt ergibt, elektrische Energie für mindestens einen Verbraucher.

Ferner ist in FR-A-2 826 524 eine Windenergieanlage mit einem Generator und einer Steuerung bzw. einem Regler offenbart, mittels dessen die optimale Leistung aus dem Generator erzeugt werden soll.

Darüber hinaus offenbart DE-U-200 20 232 eine Windkraftanlage mit einer Hilfsenergieeinrichtung zur Verstellung von Rotorblättern in einem Fehlerfall, wobei der Hilfsgenerator Energie aus kinetischer Energie zumindest der Rotorwelle erhält und die Energie des Hilfsgenerators zumindest an einen Stellmotor zur Verstellung eines Rotorblatts in einer Fahnenstellung leitet.

Des Weiteren offenbart DE-U-201 13 372 eine Vorrichtung zur autonomen Energieversorgung unter Nutzung von Windenergieanlagen, wobei für eine unterbrechungsfreie Stromversorgung (USV) der in einem Inselnetz vorgesehenen Verbraucher unter anderem ein Verbrennungsmotor vorgesehen ist, der die Versorgung der Verbraucher übernimmt, wenn die Spannung aus der regenerativen Energiequelle Wind nicht ausreicht, so dass Lücken im Energieangebot überbrückt werden.

Außerdem ist in DE-A-40 33 696 ein Generator eines Profilsegelrotors offenbart.

Des Weiteren ist in WO-A-02/086314 ein Verfahren zum Betreiben einer Windenergieanlage mit einem Generator zum Abgeben elektrischer Leistung an einen elektrischen Verbraucher beschrieben. Um Schwankungen im Netz entgegenzuwirken, ist vorgesehen, dass die von dem Generator an den Verbraucher abgegebene Leistung in Abhängigkeit von einem an den Verbraucher abgegebenen Strom geregelt wird.

Es ist die Aufgabe der vorliegenden Erfindung, ein effizientes Verfahren zum Betrieb eines Windenergieanlagenparks, insbesondere eines Offshore-Windenergieanlagenparks, bei Ausfall oder Störung eines den Windenergieanlagenpark versorgenden Spannungsnetzes (Versorgungsnetz) oder bei vorgesehenen Arbeiten an Übertragungsnetzkomponenten des Windenergieanlagenparks zu ermöglichen.

Gelöst wird diese Aufgabe durch ein Verfahren zum Betrieb eines Windenergieanlagenparks mit Windenergieanlagen, insbesondere eines Offshore-Windenergieanlagenparks, bei Ausfall oder Störung eines den Windenergieanlagenpark versorgenden Spannungsnetzes (Versorgungsnetz) oder bei geplanten Abschaltungen von Übertragungsnetzkomponenten des Windenergieanlagenparks mit den folgenden Verfahrensschritten:
- Detektieren einer Störung oder eines Ausfalls des Versorgungsnetzes oder eines Signals, das zur Vorbereitung der Arbeiten an den Übertragungsnetzkomponenten übermittelt wird,
- Inbetriebnahme einer Notstromversorgungseinrichtung, wobei die Notstromversorgungseinrichtung einen Verbrennungsmotor, insbesondere einen Dieselmotor, umfasst, und
- gesteuertes Erhöhen der von der Notstromversorgungseinrichtung an Transformatoren des Windenergieanlagenparks abgegebenen Leistung, wobei das gesteuerte Erhöhen der Leistung über eine Strombegrenzung erfolgt und wobei die Aufmagnetisierung der Transformatoren des Windenergieanlagenparks gezielt gesteuert wird,
und wobei die Notstromversorgungseinrichtung leistungsgedrosselt betrieben wird, sobald ein Drosselungssignal, insbesondere von der Windparksteuervorrichtung, übertragen wird.

Die Inbetriebnahme der Notstromversorgungseinrichtung geschieht hierbei vorzugsweise vollständig automatisch.

Vorzugsweise wird die Leistung über ein Mittelspannungsnetz des Windenergieanlagenparks den Windenergieanlagen bereitgestellt. Die Versorgung der Windturbinen geschieht somit vorzugsweise über eine Aufschaltung der Notstromversorgungseinrichtung auf das Mittelspannungsnetz des Windenergieanlagenparks. An der Mittelspannungsverbindungsvorrichtung können auch Mittelspannungskabel bzw. die Mittelspannungskabelstränge, die zu den Windenergieanlagen führen, anliegen. Außerdem liegt das Versorgungsnetz entsprechend transformiert an der Mittelspannungsverbindungsvorrichtung, die vorzugsweise eine Mittelspannungsschiene ist, an.

Besonders effizient ist das Verfahren dann, wenn das gesteuerte Erhöhen der Leistung über eine Strombegrenzung gesteuert wird. Hierdurch kann die Magnetisierung bzw. Aufmagnetisierung der Transformatoren gezielt gesteuert werden, und zwar entsprechend langsam. Die Aufmagnetisierung geschieht vorzugsweise in einem Zeitfenster von ungefähr 10 bis 30 Sekunden.

Soweit im Rahmen der Erfindung von Steuerung die Rede ist, ist auch der Begriff Regelung zu verstehen.

Vorzugsweise wird vor der Inbetriebnahme der Notstromversorgungseinrichtung geprüft, ob die Verbindung der Notstromversorgungseinrichtung mit dem Mittelspannungsnetz und eine Trennung des Mittelspannungsnetzes des Windenergieanlagenparks vom Versorgungsnetz erfolgt ist. Es wird insbesondere geprüft, ob alle Verriegelungsbedingungen erfüllt sind. Wenn vorzugsweise die Steuerung bei Inbetriebnahme der Notstromversorgungseinrichtung ein Signal an die Windenergieanlage sendet, das eine Inbetriebnahme der Notstromversorgungseinrichtung repräsentiert, können die Windenergieanlagen auf Leerlauf gestellt werden bzw. in einem Modus gebracht werden, in der keine Leistungsabgabe geschieht. Es kann auch vorgesehen sein, dass nicht sämtliche Windenergleanlagen entsprechend gestellt bzw. betrieben werden, so dass eine oder weitere Windenergieanlagen noch für die Versorgung einiger Komponenten des Windenergieanlagenparks vorgesehen sind, und zwar insbesondere um die Funktion der Sekundärsysteme der Windenergieanlagen bzw. des Parks aufrecht zu erhalten. Bei den Sekundärsystemen der Windenergieanlagen bzw. dem Park handelt es sich insbesondere um eine Azimuthwinkel-Verstellung, eine Hindernisbefeuerung, eine Versorgung von Wechselrichtern, eine Klimatisierung von elektronischen Komponenten, gegebenenfalls eine Blattwinkel-verstellung und Ähnliches bzw. Weiteres.

Vorzugsweise werden die Windenergieanlagen ohne Leistungsabgabe in das Mittelspannungsnetz betrieben, wenn die Notstromversorgungseinrichtung in Betrieb ist.

Wenn vorzugsweise die Notstromversorgungseinrichtung als Netzbildner dient, können vorzugsweise in den Windenergleanlagen verwendete, doppelt gespeiste Asynchronmotoren mit einer Frequenz und Spannung versorgt werden, wobei eine Simulation des an sich vorliegenden Versorgungsnetzes ermöglicht ist. In diesem Fall kann der Windenergieanlagenpark auch ohne Vorliegen eines Versorgungsnetzes in Betrieb genommen werden. Es kann dann zum Netzaufbau des Versorgungsnetzes mitgewirkt werden. Es können auch weitere Leistungswiderstände vorgesehen sein. Vorzugsweise ist auch wenigstens eine Blindleistungskompensationseinrichtung und/oder ein Phasenschieber vorgesehen. Die Leistungswiderstände dienen dazu, Leistung, insbesondere der Windenergieanlagen, abzugeben bzw. zu vernichten, wenn- diese Leistung nicht in das Versorgungsnetz eingespeist werden kann. Insbesondere ermöglicht es die Erfindung auch Übertragungsnetzkomponenten, wie beispielsweise Gleichrichter, mit entsprechender Spannung zu versorgen. Außerdem kann bei Arbeiten an Übertragungsnetzkomponenten der Windenergieanlagenpark heruntergefahren werden und der Betrieb über die Notstromversorgungseinrichtung ermöglicht sein.

Vorzugsweise dient die Notstromversorgungseinrichtung zur Versorgung wenigstens eines Teils der Übertragungsnetzkomponenten, wenn keine Störung im Versorgungsnetz detektiert wird.

Vorzugsweise ist die Notstromversorgungseinrichtung derart ausgelegt, dass eine Notversorgung des Windenergieanlagenparks ohne Stromversorgung einer Windenergieanlage ermöglicht ist. Insbesondere sind bei Sturm möglicherweise sämtliche Windenergieanlagen auszuschalten. In diesem Fall ist die Notstromversorgungseinrichtung derart auszulegen, dass gleichzeitig oder gestaffelt, d.h. zeitlich hintereinander, die Sekundärsysteme der Windenergieanlagen betrieben werden können (bspw. Motoren für eine Azimutwinkel-Verstellung), unterbrechungsfreie Stromversorgungen versorgt werden können, sofern die gepufferte Leistung nicht mehr ausreicht, eine Befeuerung ermöglicht wird, eine Gleichrichterversorgung ermöglicht wird, Leerlaufverluste der Transformatoren Berücksichtigung finden bzw. kompensiert werden und gegebenenfalls noch eine Blattwinkel-Verstellung ermöglicht wird.

Vorzugsweise wird ein automatischer, insbesondere periodischer, Selbsttest der Notstromversorgungseinrichtung durchgeführt, insbesondere vorzugsweise in vorgebbaren Zeitabständen.

In einem zweckmäßigen Verfahrensschritt wird die Notstromversorgungseinrichtung automatisch ausgeschaltet oder in einem Stand-by-Betrieb betrieben, nachdem detektiert wurde, dass das Versorgungsnetz wieder in Betrieb ist. Unter dem Merkmal, dass das Versorgungsnetz wieder in Betrieb ist, wird insbesondere auch verstanden, dass dieses ordnungsgemäß in Betrieb ist bzw. Schwankungen aufweist, die unter einer Toleranzgrenze, die insbesondere vorgebbar ist, liegen.

Vorzugsweise wird eine Ferndiagnose und/oder eine Fernsteuerung durchgeführt. Die Fernsteuerung kann beispielsweise vorsehen, einen Selbsttest der Notstromversorgungseinrichtung auszuführen. Die Fernsteuerung kann auch nach einer Ferndiagnose, dass beispielsweise einige Windenergieanlagen defekt sind, diese außer Betrieb nehmen. Ferner ist es mittels der Ferndiagnose möglich festzustellen, ob an Übertragungsvorrichtungen Reparaturen vorgenommen werden müssen, so dass entsprechende Schalter geschlossen werden können und ein Betrieb über die Notstromversorgungseinrichtung ermöglicht wird. Die Signale für die Fernsteuerung oder die Ferndiagnose können über Kabel und bevorzugt über Funk übermittelt werden.

Vorzugsweise wird die Notstromversorgungseinrichtung leistungsgedrosselt gedrosselt betrieben, sobald bspw. eine vorgebbare Menge an Betriebsmitteln unterschritten ist. Die Windparksteuerung detektiert ein vorgebbares Ereignis und drosselt die Leistungsabgabe und damit den Betriebsmittelverbrauch der Notstromversorgungseinrichtung zweckmäßigerweise. In diesem Fall ist es vorzugsweise so, dass nur noch sicherheitsrelevante Energie bzw. Leistung verbrauchende Verfahrensschritte durchgeführt werden, wie beispielsweise eine Azimutwinkel-Verstellung. Bei der Azimutwinkel-Verstellung handelt es sich um eine Nachführung der Windenergieanlage um den Azimutwinkel bei sich ändernden Windrichtungen. Vorzugsweise findet eine gestaffelte Ansteuerung von Vorrichtungen einer Windenergieanlage und/oder eine gestaffelte Ansteuerung von Windenergieanlagen statt. Beispielsweise kann bei einer Windenergieanlage zunächst der Azimutwinkel verfahren werden und danach der Rotorblattwinkel bzw. Pitch-Winkel. Es kann auch zunächst der Azimutwinkel einer Windenergieanlage und anschließend der einer zweiten Windenergieanlage verfahren werden. Bevorzugt können die Azimutwinkel sämtlicher Windenergieanlagen des Parks gleichzeitig verfahren werden und andere Funktionen gestaffelt ausgeführt werden. Im Rahmen der Erfindung bedeutet der Begriff "Azimutwinkel verstellen" insbesondere, dass der Rotor einer Windenergieanlage im Hinblick auf den Azimutwinkel verschwenkt wird. Dadurch wird weniger Betriebsmittel der Notstromversorgungseinrichtung verbraucht und die Betriebsmittel halten länger. Eine Drosselung der Notstromversorgungseinrichtung kann auch geschehen, wenn die Notstromversorgungseinrichtung eine vorgebbare Betriebsdauer überschritten hat. Das Drosselungssignal wird vorzugsweise nicht (mehr) übertragen, wenn eine vorgebbare Windstärke überschritten wird.

Hierzu ist ein Windenergieanlagenpark mit wenigstens zwei Windenergieanlagen und einer Notstromversorgungseinrichtung umfassend wenigstens ein Notstromversorgungsaggregat vorgesehen, wobei eine Steuervorrichtung zum gesteuerten Erhöhen der von der Notstromversorgungseinrichtung zur Verfügung gestellten Leistung vorgesehen ist. Durch den Windenergieanlagenpark ist eine sichere Inbetriebnahme einer Notstromversorgungseinrichtung ermöglicht. Unter Notstromversorgungsaggregat wird insbesondere auch eine Notstromversorgungsvorrichtung verstanden.

Vorzugsweise sind mehrere Windenergieanlagen vorgesehen. Vorzugsweise sind die Windenergieanlagen in wenigstens zwei Unterkreise aufgeteilt, wobei jedem Unterkreis ein Notstromversorgungsaggregat zugeordnet ist. In diesem Fall können mehrere Notstromaggregate vorgesehen sein, die kleiner dimensioniert sind, als ein einziges Notstromaggregat, was zum einen zu einer kostengünstigen Verfahrensführung führt und zum anderen sicherheitstechnisch sinnvoll ist, da so eine Redundanz der Notstromversorgungsaggregate erzeugt werden kann. Vorzugsweise umfasst das Notstromversorgungsaggregat einen Verbrennungsmotor, insbesondere einen Dieselmotor. Die Notstromversorgungseinrichtung ist vorzugsweise als Netzbildner ausgestaltet. Es ist außerdem vorzugsweise eine Blindleistungskompensationseinrichtung und/oder ein Phasenschieber vorgesehen. Die Notstromversorgungseinrichtung ist wenigstens mit einer Leistung dimensioniert, die ausreicht, um eine Notversorgung der Windenergieanlagen ohne Stromversorgung durch eine Windenergieanlage zu ermöglichen. In diesem Fall kann auch bei Abschalten sämtlicher Windenergieanlagen eine Notstromversorgung gegeben sein, die insbesondere bei einem Sturm Platz greift.

Vorzugsweise ist ferner eine Ferndiagnoseeinrichtung und/oder eine Fernsteuereinrichtung der Notstromversorgungseinrichtung vorgesehen.

Die Erfindung wird nachstehend ohne Beschränkung des allgemeinen Erfindungsgedankens anhand von Ausführungsbeispielen unter Bezugnahme auf die Zeichnungen beschrieben. Bezüglich aller im Text nicht näher erläuterten erfindungsgemäßen Einzelheiten wird ausdrücklich auf die Zeichnungen verwiesen. Es zeigen:
- Fig. 1: eine schematische Skizze eines erfindungsgemäßen Windenergieanlagenparks, und
- Fig. 2: eine schematische Skizze eines weiteren erfindungsgemäßen Windenergieanlagenparks.

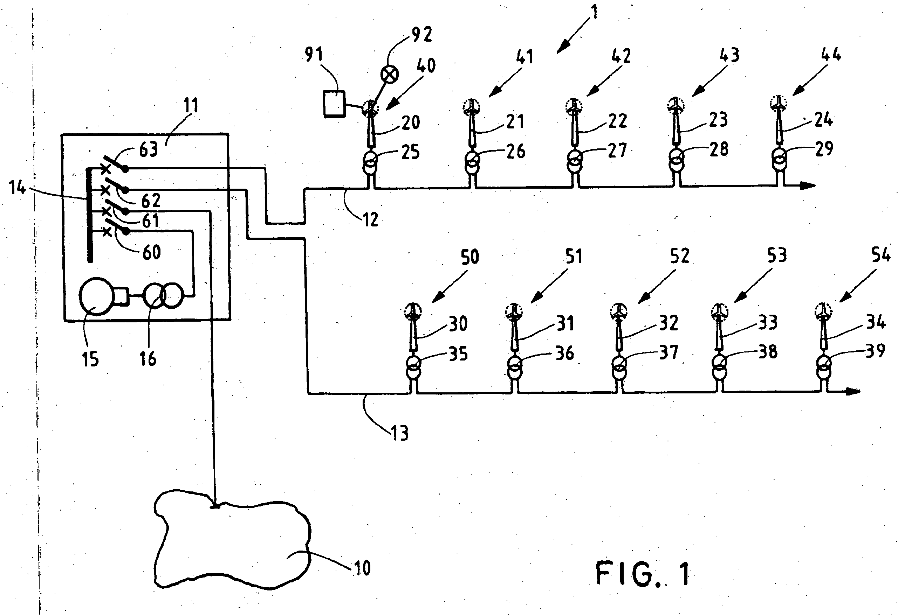

Figur 1 zeigt eine schematische Skizze eines erfindungsgemäßen Windenergieanlagenparks 1, der mit einem Versorgungsnetz 10 verbindbar ist. Üblicherweise ist in dem Windenergieanlagenpark 1 noch ein Transformator zwischen dem Versorgungsnetz 10 und dem Windenergieanlagenpark vorgesehen, um die in dem Windenergieanlagenpark erzeugte Mittelhochspannung in eine Hochspannung umzuwandeln. Dieser Transformator kann auch im Versorgungsnetz 10 vorgesehen sein. Die Mittelspannung liegt üblicherweise in einem Bereich von 10 bis 26 kV.

In Figur 1 sind zwei Stränge mit jeweils fünf Windenergieanlagen 40 - 44 sowie 50 - 54 dargestellt. Der eine Strang ist an einem Mittelspannungskabel 12 angeschlossen und der zweite Strang an einem Mittelspannungskabel 13. Die Windenergieanlagen 40 - 44 sowie 50 - 54 umfassen jeweils einen Rotorturm 20 - 24 bzw. 30 - 34 sowie jeweils einen Transformator 25 - 29 sowie 35 - 39. Die Windenergieanlagen können beispielsweise 2 MW-Anlagen sein. Die Transformatoren können beispielsweise auf eine Leistung von 2,5 MVA ausgelegt sein. An den ersten Rotorturm 20 ist auch noch schematisch eine Azimutwinkel-Verstellung 91 umfasssend beispielsweise einen Motor sowie eine Befeuerung 92 angedeutet.

Die Mittelspannungskabel 12 und 13 sind über Schalter 62 und 63 einer Mittelspannungsschiene 14 in einer Übergabestation 11 zuschaltbar. Entsprechend ist über einen Schalter 61 das Versorgungsnetz 10 an die Mittelspannungsschiene 14 schaltbar. Die Erfindung sieht nun vor, einen Dieselgenerator 15 und einen Transformator 16, deren erzeugte Leistung über einen Schalter 60 an die Mittelspannungsschiene 14 gegeben werden kann, gesteuert in Betrieb zu nehmen, sofern das Versorgungsnetz 10 zusammenbricht oder große Störungen aufweist. Große Störungen sind insbesondere Störungen, die einer Variation der Spannung außerhalb eines vorgebbaren Wertes bzw. Toleranzbereiches entsprechen. Auf diese Weise ist eine effiziente und sichere Versorgung des Windenergieanlagenparks und auch weiterer Komponenten des Windenergieanlagenparks über einen zentralen Dieselgenerator und die Versorgung über das Mittelspannungsnetz möglich. Es kann eine Verriegelung und eine Schnittstelle von einer Dieselsteuervorrichtung zum Parkmanagement und darüber hinaus zu einer Fernüberwachung vorgesehen sein.

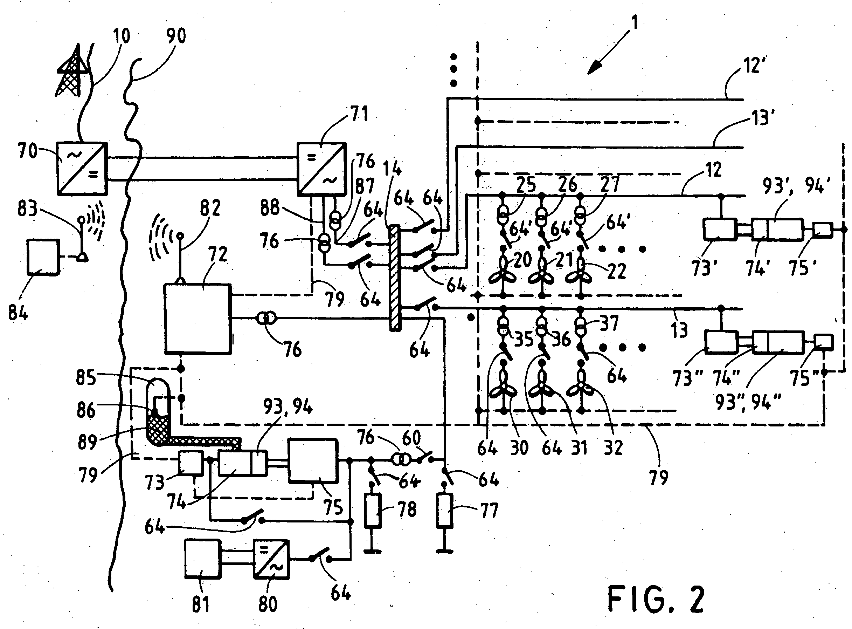

Figur 2 zeigt eine weitere schematische Darstellung eines erfindungsgemäßen Windenergieanlagenparks mit mehr Komponenten als gemäß Figur 1. Es sind mehrere Mittelspannungskabel 12, 12', 13, 13', dargestellt, die durch Punkte angedeutet auch noch mehr sein können. An diesen Mittelspannungskabeln 12 - 13' sind entsprechende Windenergieanlagen 40 - 44, 50 - 54 umfassend einen Rotorturm 20 - 22, 30 - 32, einen Schalter 64 und einen Transformator 25 - 27 und 35 - 37 angeordnet. Es können auch, wie durch die Punkte angedeutet ist, weitere Windenergieanlagen vorgesehen sein. In diesem Ausführungsbeispiel sind außer einer zentralen Notstromversorgungseinrichtung, insbesondere in Form der Steuervorrichtung 73, des Dieselmotors 74, der Blindleistungskompensations-vorrichtung 93 bzw. des Phasenschiebers 94 und des Wechselstromgenerators 75 je Windenergieanlagenzweig bzw. je Mittelspannungskabel 12, 12', 13, 13', eine Hilfsnotstromversorgungseinrichtung in Form der Steuervorrichtung 73' bzw. 73", des Dieselmotors 74' bzw. 74", der Blindleistungskompensationsvorrichtung 93' bzw. 93" oder des Phasenschiebers 94' bzw. 94" und des Wechselstromgenerators 75' bzw. 75" vorgesehen. Es kann auch für jeweils zwei Mittelspannungskabel bzw. -zweige eine Hilfsnotstromversorgungseinrichtung vorgesehen sein. Die Mittelspannungskabel 12 - 13' sind über Schalter 64 mit einer Mittelspannungsschiene 14 verbunden.

Es ist außerdem eine, insbesondere zentrale, Steuervorrichtung 72 vorgesehen, die in Funkverbindung über eine Antenne 82 mit einer Antenne 83 und einem entsprechenden Kabel einer Betriebsaufsicht 84 verbunden ist. Es ist außerdem ein Kommunikationsnetz 79 gestrichelt dargestellt. Das Kommunikationsnetz 79 ist mit entsprechenden Steuervorrichtungen und Messvorrichtungen verbunden. Beispielsweise ist das Kommunikationsnetz 79 mit einem Fühlstandssensor 86 des Dieseltanks 85 zum Messen des Füllstands des Diesels 89 in dem Dieseltank 85 vorgesehen. Entsprechende Dieseltanks sind auch bei den Hilfsnotstromversorgungseinrichtungen - allerdings nicht dargestellt - vorgesehen. Die Steuervorrichtung 72 steuert als Zentrale den Windenergieanlagenpark 1. Hierbei können entsprechende Steuerbefehle auch von der Betriebsaufsicht 84 kommen.

Die zentrale Notstromversorgungseinrichtung umfasst einen Dieselmotor 74, der mit Diesel 89 vom Dieseltank 85 versorgt wird. Der Dieselmotor 74 wird durch eine Steuervorrichtung 73 gesteuert. Es ist außerdem eine Blindleistungskompensationsvorrichtung 93 oder ein Phasenschieber 94 vorgesehen. Der Dieselmotor 74 ist mit einem Wechselstromgenerator 75 verbunden. Die erzeugte Wechselspannung wird über einen Transformator 76 und einen Schalter 60 der Mittelspannungsschiene 14 zugeführt. Zur Inbetriebnahme des Dieselmotors 74 ist eine Primärquelle 81, beispielsweise in Form einer Starterbatterie, vorgesehen, die an einem Wechselrichter 80 für die Primärquelle 81 angeschlossen ist. Die Primärquelle 81 kann auch dazu dienen, für eine Übergangszeit, in der das Dieselaggregat noch nicht in Betrieb genommen wurde, wesentliche Funktionen des Windenergieanlagenparks 1 aufrechtzuerhalten. Es ist außerdem ein Lastwiderstand 78 zur Ableitung der Generatorleistung bei Testläufen vorgesehen. Außerdem ist ein Lastwiderstand 77 zur Ableitung der Parkleistung vorgesehen. Die Mittelspannungsschiene 14 kann auch bei ca. 10 kV oder ca. 20 kV betrieben werden. Das Datennetz bzw. Kommunikationsnetz 79 dient zur Kommunikation zwischen der Windparksteuerung 72 sowie der Steuerung des zentralen Hilfsaggregats 73 - 75 als auch der Windkraftanlagen und den verteilten Hilfsaggregaten 73' - 75' und 73" - 75". Die Steuervorrichtung 73 kann auch eine Startbatterie für den Dieselmotor 74 umfassen.

Die von der Windenergieanlage erzeugte Leistung wird über eine Hochspannungsleitung 88 einem parkseitigen Wechselrichter 71 zugeführt, der eine Gleichspannung erzeugt, um diese über eine relativ große Distanz von der Wasserseite über die Wasser-/Landlinie 90 zu einem netzseitigen Wechselrichter 70 zu führen. Der netzseitige Wechselrichter 70 konvertiert die Gleichspannung in eine Hochspannung, die dem Versorgungsnetz 10 zugeführt wird. Zur Versorgung des parkseitigen Wechselrichters 71 sind eine Versorgungsleitung 87 und ein Transformator 76 vorgesehen.

Gemäß der Erfindung werden die Windturbinen bzw. Windenergieanlagen mit einer Aufschaltung eines Notstromaggregats auf das Mittelspannungsnetz des Windparks versorgt. Die Zuschaltung bzw. das Hochfahren des Generators geschieht über eine Strombegrenzung, um eine Überlast zu vermeiden und die Transformatoren gesteuert zu magnetisieren. Ein Aufmagnetisieren kann in ca. 10 bis 30 Sekunden erledigt sein.

Das Notstromaggregat bzw. die Notstromaggregate bzw. allgemeiner die Notstromversorgungseinrichtung wird von der Größe beispielsweise derart ausgelegt, dass bei einem Gesamtenergieveriust der Transformatoren von bspw. 130 kW sowie entsprechendem Sekundärleistungsbedarf der Anlagen bei beispielsweise 10 Anlagen 300 kW an Leistung abzugeben ist. Gegebenenfalls kann eine kleinere Auslegung vorgenommen werden, wenn eine gestaffelte Ansteuerung der Windenergieanlagen bzw. der Sekundärkomponenten der Windenergieanlage ermöglicht wird. Die Steuervorrichtung 72 bzw. Parksteuerung gibt ein Signal zum Hochfahren der Notstromversorgungseinrichtung, beispielsweise wenn das Versorgungsnetz 10 ausfällt. Es kann auch eine Zeitschaltung zum Einschalten der Notstromversorgungseinrichtung vorgesehen sein. Für einen Testlauf der Notstromversorgungseinrichtung kann eine Blindlast vorgesehen sein.

Der Windenergieanlagenpark kann durch die Erfindung auch ohne ein Versorgungsnetz 10 betrieben werden. Die primäre Aufgabe der Notstromversorgungseinrichtung ist die Aufrechterhaltung der Funktion der Sekundärsysteme der Windenergieanlagen bei einem Ausfall des Versorgungsnetzes. Besonders wichtig ist die Aufrechterhaltung der Windnachführung auch abgeschalteter Windenergieanlagen. Hierdurch werden die Belastungen der Windenergietürme und der entsprechenden Blätter reduziert. Bei einem Eigenbedarf einer Windenergieanlage im Stillstand von 30 kVA, in denen enthalten sind die Leerlaufverluste des jeweiligen Transformators, die Versorgung der Azimutmotoren, die Versorgung der unterbrechungsfreien Stromversorgung und die Befeuerung, ist die Notstromversorgungseinrichtung vorzugsweise derart auszulegen, dass diese eine Leistung von 30 kVA multipliziert mit der Anzahl der Windenergieanlagen aufweist. Der verwendete Dieselgenerator sollte eine Spannung von 230/400 V bei 50 Hz aufweisen, weswegen ein entsprechender Transformator zur Anpassung an die Mittelspannung vorgesehen ist.

Außerdem ist in der Mittelspannungsschaltanlage der Übergabestation ein zusätzliches Leistungsschalter-Feld vorgesehen, und zwar mit einer Verriegelung gegen den Leistungsschalter des Versorgungsnetz-Feldes. Die Notstromversorgungseinrichtung ist in das Überwachungskonzept des Windparks zu integrieren. Die Notstromversorgungseinrichtung ist inselnetzfähig und hält die Spannung und die Frequenz über eine Last von 0 bis 100% relativ konstant.

Es kann ein automatischer Start mit einer 12 V Batterie erfolgen, wobei die Leistung langsam hochgefahren wird. Es kann ein automatischer Stopp erfolgen bzw. eine Rückschaltung in einen Standby-Betrieb. Es ist ein programmierbarer Testbetrieb, beispielsweise einmal im Monat für 30 Minuten bis zur Betriebstemperatur des Dieselmotors der Notstromversorgungseinrichtung, vorgesehen.

Es findet eine Selbstüberwachung im mechanischen, thermischen und elektrischen Sinne statt. Der Vorteil eines Dieselmotors in einer Notstromversorgungseinrichtung sind relativ lange Wartungsintervalle, die mit denen der Windenergieanlagen vergleichbar sind. Der Dieseltank hat eine Füllkapazität, der bei Volllast wenigstens 24 Stunden Betrieb ermöglicht. Es ist möglich, nur einen einzigen Dieselgenerator vorzusehen. Es können allerdings auch mehrere Dieselgeneratoren für den gesamten Windpark bzw. den Windenergieanlagenpark vorgesehen sein. Es ist ein zusätzlicher Transformator Netzspannung zu Mittelspannung in der Klasse des Dieselgenerators vorzusehen. Es ist außerdem eine Regelung bzw. Steuerung vorgesehen, die dafür sorgt, dass bei Betrieb der Notstromversorgungseinrichtung die Windenergieanlagen nicht wieder anfahren.

Die Fernsteuerung bzw. Ferndiagnose sieht auch eine Füllstandsübermittlung des Dieseltanks 85 vor sowie einen Starterbatteriestatus. Bei Arbeiten an den Übertragungsnetzkomponenten 70 und 74 beispielsweise können die Windenergieanlagen des Windenergieanlagenparks heruntergefahren werden und ein Betrieb über die Notstromversorgungseinrichtung geschehen. Bei einem Ausführungsbeispiel gemäß Figur 2 kann ein Hilfsaggregat der Notstromversorgungseinrichtung, beispielsweise 73' - 75' oder 73" bis 75", also die Steuervorrichtung 73' bis 73", der Dieselmotor 74' bzw. 74" und der Wechselstromgenerator 75' bzw. 75" verwendet werden, um auch einen weiteren Kreis, bei dem ein entsprechendes Hilfsaggregat ausgefallen ist, zu versorgen. Unter weiterem Kreis wird insbesondere ein weiterer Strang bzw. die an den Mittelspannungskabeln 12, 12', 13 und 13' angeschlossenen Windenergieanlagen verstanden.

Bei entsprechender Unterdimensionierung der Notstromversorgungseinrichtung bzw. bei Unterschreiten einer Mindestmenge an Betriebsmitteln können beispielsweise nur noch sicherheitsrelevante Vorgänge ausgeführt werden, wie beispielsweise eine Azimut-Verstellung oder ein gestaffeltes Ausführen von Vorgängen erfolgen, um die Spitzenleistung minimal zu halten. Es kann auch ein gestaffeltes Ausführen von Ansteuerungen von Windenergieanlagen erfolgen. Dieser Sparmodus gilt insbesondere bei systematischer Unterdimensionierung der Notstromversorgungseinrichtung, bei einer Trennung von dem Versorgungsnetz 10 über eine bestimmte vorgebbare Zeit und/oder auch in Abhängigkeit von Wetterbedingungen. Bei Sturm könnte eine gestaffelte Ausführung beispielsweise nicht sinnvoll sein, bei Flaute sehr wohl.

### Bezugszeichenliste

- 1: Windenergieanlagenpark
- 10: Versorgungsnetz
- 11: Übergabestation
- 12, 12': Mittelspannungskabel
- 13, 13': Mittelspannungskabel
- 14: Mittelspannungsschiene
- 15: Dieselgenerator
- 16: Transformator
- 20 - 24: Rotorturm
- 25 - 29: Transformator
- 30 - 34: Rotorturm
- 35 - 39: Transformator
- 40 - 44: Windenergieanlage
- 50 - 54: Windenergieanlage
- 60 - 63: Schalter
- 64, 64': Schalter
- 70: netzseitiger Wechselrichter
- 71: parkseitiger Wechselrichter
- 72: Steuervorrichtung
- 73, 73', 73": Steuervorrichtung
- 74, 74', 74": Dieselmotor
- 75, 75', 75": Wechselstromgenerator
- 76: Transformator
- 77: Lastwiderstand
- 78: Lastwiderstand
- 79: Kommunikationsnetz
- 80: Wechselrichter für Notprimärquelle
- 81: Primärquelle
- 82: Antenne
- 83: Antenne
- 85: Dieseltank
- 86: Füllstandssensor
- 87: Vorsorgungsleitung
- 88: Hochspannungsleitung
- 89: Diesel
- 90: Wasser-/Landlinie
- 91: Azimutwinkel-Verstellung
- 92: Befeuerung
- 93, 93', 93": Blindleistungskompensationsvorrichtung
- 94, 94', 94": Phasenschieber

## Patentansprüche

1. Verfahren zum Betrieb eines Windenergieanlagenparks (1) mit Windenergieanlagen (40 - 44, 50 - 54), insbesondere eines Offshore-Windenergieanlagenparks, bei Ausfall oder Störung eines den Windenergieanlagenpark (1) versorgenden Spannungsnetzes (Versorgungsnetz) (10) oder bei geplanten Abschaltungen von Übertragungsnetzkomponenten (11, 70, 71) mit den folgenden Verfahrensschritten:
- Detektieren einer Störung oder eines Ausfalls des Versorgungsnetzes (10) oder eines Signals, das zur Vorbereitung der Arbeiten an den Übertragungsnetzkomponenten (11, 70, 71) übermittelt wird,
- Inbetriebnahme einer Notstromversorgungseinrichtung (15, 16, 73 - 75"), wobei die Notstromversorgungseinrichtung (15, 16, 73 - 75") einen Verbrennungsmotor (15, 74 - 74"), insbesondere einen Dieselmotor, umfasst, und
- gesteuertes Erhöhen der von der Notstromversorgungseinrichtung (15, 16, 73 - 75") an Transformatoren (25 - 29, 35 - 39) des Windenergieanlagenparks (1) abgegebenen Leistung, wobei das gesteuerte Erhöhen der Leistung über eine Strombegrenzung gesteuert wird und hierdurch die Aufmagnetisierung der Transformatoren (25 - 29, 35 - 39) des Windenergieanlagenparks (1) gezielt gesteuert wird,
und wobei die Notstromversorgungseinrichtung (15, 16, 73 - 75") leistungsgedrosselt betrieben wird, sobald ein Drosselungssignal, insbesondere von der Windparksteuervorrichtung (72), übertragen wird.

2. Verfahren nach Anspruch 1, **dadurch gekennzeichnet, dass** die Steuerung bei Inbetriebnahme der Notstromversorgungseinrichtung (15, 16, 73 - 75") ein Signal an die Windenergieanlagen (20 - 24, 30 - 34) sendet, das eine Inbetriebnahme der Notstromversorgungseinrichtung (15, 16, 73 - 75") repräsentiert.

3. Verfahren nach Anspruch 1 oder 2, **dadurch gekennzeichnet, dass** die Leistung über ein Mittelspannungsnetz (12 - 14) des Windenergieanlagenparks (1) den Windenergieanlagen (40 - 44, 50 - 54) bereitgestellt wird.

4. Verfahren nach einem der Ansprüche 1 bis 3, **dadurch gekennzeichnet, dass** vor der Inbetriebnahme der Notstromversorgungseinrichtung (15, 16, 73 - 75") geprüft wird, ob die Verbindung der Notstromversorgungseinrichtung (15, 16, 73 - 75") mit dem Mittelspannungsnetz (12 - 14) und eine Trennung des Mittelspannungsnetzes (12 - 14) des Windenergieanlagenparks (1) vom Versorgungsnetz (10) erfolgt ist.

5. Verfahren nach einem der Ansprüche 1 bis 4, **dadurch gekennzeichnet, dass** die Windenergieanlagen (40 - 44, 50 - 54) ohne Leistungsabgabe in das Mittelspannungsnetz (12 - 14) des Windenergieanlagenparks (1) betrieben werden, wenn die Notstromversorgungseinrichtung (15, 16, 73 - 75") in Betrieb ist.

6. Verfahren nach einem der Ansprüche 1 bis 5, **dadurch gekennzeichnet, dass** die Notstromversorgungseinrichtung (15, 16, 73 - 75") als Netzbildner dient.

7. Verfahren nach einem der Ansprüche 1 bis 6, **dadurch gekennzeichnet, dass** die Notstromversorgungseinrichtung (15, 16, 73 - 75") zur Versorgung wenigstens eines Teils der Übertragungsnetzkomponenten (11, 70, 71) dient, wenn keine Störung im Versorgungsnetz (10) detektiert wird.

8. Verfahren nach einem der Ansprüche 1 bis 7, **dadurch gekennzeichnet, dass** die Notstromversorgungseinrichtung (15, 16, 73 - 75") derart ausgelegt ist, dass eine Notversorgung der Windenergieanlagen (20 - 24, 30 - 34) des Windenergieanlagenparks (1) ohne Stromversorgung einer Windenergieanlage (20 - 24, 30 - 34) ermöglicht ist.

9. Verfahren nach einem der Ansprüche 1 bis 8, **dadurch gekennzeichnet, dass** ein automatischer, insbesondere periodischer, Selbsttest der Notstromversorgungseinrichtung (15, 16, 73 - 75") durchgeführt wird.

10. Verfahren nach einem der Ansprüche 1 bis 9, **dadurch gekennzeichnet, dass**, nachdem detektiert wurde, dass das Versorgungsnetz (10) wieder in Betrieb ist, die Notstromversorgungseinrichtung (15, 16, 73 - 75") automatisch ausgeschaltet oder in einem Stand-by-Betrieb betrieben wird.

11. Verfahren nach einem der Ansprüche 1 bis 10, **dadurch gekennzeichnet, dass** eine Ferndiagnose und/oder eine Fernsteuerung durchgeführt wird.

12. Verfahren nach einem der Ansprüche 1 bis 11, **dadurch gekennzeichnet, dass** das Drosselungssignal übertragen wird, sobald eine vorgebbare Menge an Betriebsmitteln (89) unterschritten ist.

13. Verfahren nach einem der Ansprüche 1 bis 12, **dadurch gekennzeichnet, dass** das Drosselungssignal übertragen wird, sobald die Notstromversorgungseinrichtung (15, 16, 73 - 75") eine vorgebbare Betriebsdauer überschritten hat.

14. Verfahren nach einem der Ansprüche 1 bis 13, **dadurch gekennzeichnet, dass** das Drosselungssignal nicht übertragen wird, wenn eine vorgebbare Windstärke überschritten wird.

15. Verfahren nach einem der Ansprüche 1 bis 14, **dadurch gekennzeichnet, dass** eine gestaffelte Ansteuerung von Vorrichtungen (91, 92) einer Windenergieanlage (20 - 24, 30 - 34) und/oder eine gestaffelte Ansteuerung von Windenergieanlagen (20 - 24, 30 - 34) erfolgt.

## Claims

1. A method of operating a wind park (1) with wind turbines (40 - 44, 50 - 54), particularly an offshore wind park, in the event of failure of or a disruption to a power network (mains power supply) (10) supplying the wind park (1) or in the event of planned shutdowns of network transmission components (11, 70, 71) with the following method steps:
- detecting a disruption or a failure of the mains power supply (10) or a signal which is transmitted in preparation for work on the network transmission components (11, 70, 71),
- starting operation of an emergency power supply device (15, 16, 73 - 75"), wherein the emergency power supply device (15, 16, 73 - 75") includes a combustion engine (15, 74 - 74"), particularly a diesel engine, and
- increasing in a controlled manner the power supplied by the emergency power supply device (15, 16, 73 - 75") to transformers (25 - 29, 35 - 39) of the wind park (1), wherein the controlled increase in the power is controlled by means of a current limitation and hereby the magnetisation of the transformers (25 - 29, 35 - 39) of the wind park (1) is controlled in a directed manner,
and wherein the emergency power supply device (15, 16, 73 - 75") is operated in a power-restricted manner as soon as a restriction signal is transmitted, particularly from the wind park control device (72).

2. A method as claimed in Claim 1, **characterised in that** when operation of the emergency power supply device (15, 16, 73 - 75") is started, the controller sends a signal to the wind turbines (20 - 24, 30 - 34) which represents a starting of operation of the emergency power supply device (15, 16, 73 - 75").

3. A method as claimed in Claim 1 or 2, **characterised in that** the power is provided via a medium voltage power network (12 - 14) of the wind park (1) to the wind turbines (44, 50 - 54).

4. A method as claimed in one of Claims 1 to 3, **characterised in that** before operation of the emergency power supply device (15, 16, 73 - 75") is started, a check is made whether the connection of the emergency power supply device (15, 16, 73 - 75") to the medium voltage power network (12 - 14) and a disconnection of the medium voltage power network (12 - 14) of the wind park (1) from the supply network (10) have occurred.

5. A method as claimed in one of Claims 1 to 4, **characterised in that** the wind turbines (40 - 44, 50 - 54) are operated without delivering power into the medium voltage power network (12 - 14) of the wind park (1) when the emergency power supply device (15, 16, 73 - 75") is in operation.

6. A method as claimed in one of Claims 1 to 5, **characterised in that** the emergency power supply device (15, 16, 73 - 75") serves as a network former.

7. A method as claimed in one of Claims 1 to 6, **characterised in that** the emergency power supply device (15, 16, 73 - 75") serves to supply at least a proportion of the network transmission components (11, 70, 71), when no disruption is detected in the supply network (10).

8. A method as claimed in one of Claims 1 to 7, **characterised in that** the emergency power supply device (15, 16, 73 - 75") is designed so that an emergency power supply of the wind turbines (20 - 24, 30 - 34) of the wind park (1) is rendered possible without power supply of a wind turbine (20 - 24, 30 - 34).

9. A method as claimed in one of Claims 1 to 8, **characterised in that** an automatic, particularly periodic, self-test of the emergency power supply device (15, 16, 73 - 75") is performed.

10. A method as claimed in one of Claims 1 to 9, **characterised in that** after it has been detected that the supply network (10) is again in operation, the emergency power supply device (15, 16, 73 - 75") is automatically switched off or is operated in standby operation.

11. A method as claimed in one of Claims 1 to 10, **characterised in that** remote diagnosis and/or remote control is performed.

12. A method as claimed in one of Claims 1 to 11, **characterised in that** the reduction signal is transmitted as soon as the operating equipment (89) falls below a predeterminable amount.

13. A method as claimed in one of Claims 1 to 12, **characterised in that** the reduction signal is transmitted as soon as the emergency power supply device (15, 16, 73 - 75") has exceeded a predeterminable period of operation.

14. A method as claimed in one of Claims 1 to 13, **characterised in that** the reduction signal is not transmitted when a predeterminable wind strength is exceeded.

15. A method as claimed in one of Claims 1 to 14, **characterised in that** a staggered control of devices (91, 92) of a wind turbine (20 - 24, 30 - 34) and/or a staggered control of wind turbines (20 - 24, 30 - 34) is effected.

## Revendications

1. Procédé d'exploitation d'un parc éolien (1) contenant des éoliennes (40 - 44, 50 - 54), en particulier un parc éolien offshore, en cas de panne ou de dysfonctionnement d'un réseau de tension (réseau de distribution) (10), alimentant ledit parc éolien (1), ou dans des cas de déconnexions planifiées de composants du réseau de transmission (11, 70, 71), comportant les étapes suivantes :
- détection d'un dysfonctionnement ou d'une panne du réseau de distribution (10) ou d'un signal transmis pour la préparation des travaux sur les composants du réseau de transmission (11, 70, 71),
- mise en service d'un système de distribution de courant de secours (15, 16, 73 - 75"), ledit système de distribution de courant de secours (15, 16, 73 - 75") comportant un moteur à combustion (15, 74 - 74"), en particulier un moteur diesel, et
- augmentation commandée de la puissance fournie aux transformateurs (25 - 29, 35 - 39) du parc éolien (1) par le système de distribution de courant de secours (15, 16, 73 - 75"), ladite augmentation commandée de la puissance étant commandée via une limitation de courant, et par conséquent la remagnétisation des transformateurs (25 - 29, 35 - 39) du parc éolien (1) étant commandée de manière ciblée,
et ledit système de distribution de courant de secours (15, 16, 73 - 75") étant exploité avec une restriction de puissance dès qu'un signal de restriction est transmis, en particulier par le dispositif de commande du parc (72).

2. Procédé selon la revendication 1, **caractérisé en ce que**, lors de la mise en service du système de distribution de courant de secours (15, 16, 73 - 75"), la commande émet vers les éoliennes (20 - 24, 30 - 34) un signal qui représente une mise en service du système de distribution de courant de secours (15, 16, 73 - 75").

3. Procédé selon la revendication 1 ou la revendication 2, **caractérisé en ce que** la puissance est mise à disposition des éoliennes (40 - 44, 50-54) par l'intermédiaire d'un réseau de tension moyenne (12 - 14) du parc éolien (1).

4. Procédé selon l'une quelconque des revendications 1 à 4, **caractérisé en ce que**, avant la mise en service du système de distribution de courant de secours (15, 16, 73 - 75"), il est vérifié que le système de distribution de courant de secours (15, 16, 73 - 75") est relié au réseau de tension moyenne (12 - 14) et que le réseau de tension moyenne (12 - 14) du parc éolien (1) est séparé du réseau de distribution (10).

5. Procédé selon l'une quelconque des revendications 1 à 4, **caractérisé en ce que** les éoliennes (40 - 44, 50 - 54) sont exploitées sans absorber de la puissance dans le réseau de tension moyenne (12 - 14) du parc éolien (1), lorsque le système de distribution de courant de secours (15, 16, 73 - 75") est en service.

6. Procédé selon l'une quelconque des revendications 1 à 5 **caractérisé en ce que** le système de distribution de courant de secours (15, 16, 73-75") est utilisé comme un créateur de réseau.

7. Procédé selon l'une quelconque des revendications 1 à 6 **caractérisé en ce que** le système de distribution de courant de secours (15, 16, 73-75") sert à alimenter au moins une partie des composants du réseau de transmission (11, 70, 71), lorsque aucun dysfonctionnement n'est détecté dans le réseau de distribution (10).

8. Procédé selon l'une quelconque des revendications 1 à 7 **caractérisé en ce que** le système de distribution de courant de secours (15, 16, 73-75") est configuré de telle sorte qu'une distribution de secours des éoliennes (20 - 24, 30 - 34) du parc éolien (1) est possible sans fourniture de courant à une éolienne (20 - 24, 30 - 34).

9. Procédé selon l'une quelconque des revendications 1 à 8 **caractérisé en ce qu'**est effectué, de manière périodique, un test automatique du système de distribution de courant de secours (15, 16, 73 - 75").

10. Procédé selon l'une quelconque des revendications 1 à 9, **caractérisé en ce qu'**après qu'il a été détecté que le réseau de distribution (10) est à nouveau en service, le système de distribution de courant de secours (15, 16, 73 - 75") est déconnecté automatiquement ou mis en mode stand-by.

11. Procédé selon l'une quelconque des revendications 1 à 10, **caractérisé en ce qu'**il est possible d'effectuer un diagnostic à distance et/ou une commande à distance.

12. Procédé selon l'une quelconque des revendications 1 à 11, **caractérisé en ce que** le signal de restriction est transmis dès qu'un nombre prédéfinissable de moyens d'exploitation (89) n'est pas atteint.

13. Procédé selon l'une quelconque des revendications 1 à 12, **caractérisé en ce que** le signal de restriction est transmis dès que le système de distribution de courant de secours (15, 16, 73 - 75") a dépassé une durée d'exploitation prédéfinissable.

14. Procédé selon l'une quelconque des revendications 1 à 13, **caractérisé en ce que** le signal de restriction n'est pas transmis dès que la force du vent dépasse une force prédéfinissable.

15. Procédé selon l'une quelconque des revendications 1 à 14, **caractérisé en ce qu'**il permet un contrôle échelonné des dispositifs (91, 92) d'une éolienne (20 - 24, 30 - 34) et/ou un contrôle échelonné des éoliennes (20 - 24, 30 - 34).
